# EUROPÄISCHE PATENTSCHRIFT

(11) **EP 4 312 008 B1**
(45) Veröffentlichungstag und Bekanntmachung des Hinweises auf die Patenterteilung: **17.12.2025**
(21) Anmeldenummer: 23185920.8
(22) Anmeldetag: 17.07.2023
(51) Int. Cl.: G01K 1/143

(54) **SENSORANORDNUNG MIT EINER HALTEEINRICHTUNG UND EINER TEMPERATURFÜHLEREINHEIT**
SENSOR ASSEMBLY WITH A RETAINING DEVICE AND A TEMPERATURE SENSOR UNIT
AGENCEMENT DE CAPTEURS AVEC UN DISPOSITIF DE RETENUE ET UNE UNITÉ DE CAPTEUR DE TEMPÉRATURE

(30) Priorität: 25.07.2022 DE 102022207562
(43) Veröffentlichungstag der Anmeldung: 31.01.2024
(73) Patentinhaber: VOLKSWAGEN AG, 38440 Wolfsburg (DE)
(72) Erfinder: Niggemann, Marius, 59959 Hallenberg (DE)

(56) Entgegenhaltungen:
- DE-A1- 102019 121 198
- JP-A- 2016 050 882

## Beschreibung

Die Erfindung bezieht sich auf eine Sensoranordnung vom Typ umfassend eine Halteeinrichtung zur Befestigung an einer Schiene und eine Temperaturfühlereinheit, welche an der Halteeinrichtung klemmend und lösbar gehalten ist, und gemäß dem Oberbegriff von Patentanspruch 1.

Die Schiene kann beispielsweise ein stromführender Leiter eines Elektromotors oder dergleichen sein. Jedoch kann eine Befestigung auch an anderen schienen- oder leistenförmigen Bauteilen erfolgen.

Eine gattungsgemäße Sensoranordnung, umfassend eine Halteeinrichtung zur Befestigung an einer Schiene und eine Temperaturfühlereinheit, welche an der Halteeinrichtung klemmend und lösbar gehalten ist, ist aus der deutschen Patentanmeldung Nr. 10 2020 215 884 A1 der Patentinhaberin mit dem Titel "Sensoranordnung für einen Elektromotor, Elektromotor mit einer solchen sowie Verfahren zur Einbindung eines Messelements in einen Elektromotor" bekannt.

Die bekannte Sensoranordnung umfasst drei bei der Montage miteinander zu koppelnde Bauteile, nämlich eine Halteeinrichtung, einen Temperaturfühler sowie ein Federelement. Der Temperaturfühler sowie das Federelement sind dabei in einen Aufnahmeraum an der Halteeinrichtung montiert, welche ihrerseits an der Schiene befestigt wird. Durch das Federelement wird der Temperaturfühler in Anlage gegen die Schiene gedrückt, so dass über den Temperaturfühler ein Messsignal in Bezug auf die Temperatur der Schiene gewonnen werden kann. Der Vorteil einer Halteeinrichtung im Vergleich zu angeklebten Temperaturfühlern besteht darin, dass der Temperaturfühler bei Bedarf sehr einfach ausgetauscht werden kann.

Bei der Montage der bekannten Sensoranordnung wird zunächst das Federelement in die Halteeinrichtung montiert, welche ihrerseits vorher an der Schiene befestigt worden ist. Um den Temperaturfühler möglichst kraftlos fügen zu können, wird ein keilförmig geformtes Werkzeug in eine Aussparung neben der späteren Position des Temperaturfühlers eingebracht, um das Federelement aufzuspreizen. Der Temperaturfühler kann nunmehr kraftlos in die Halteeinrichtung eingeführt werden. Anschließend wird das Werkzeug entfernt. Das Federelement gelangt hierdurch in Anlage gegen den Temperaturfühler und drängt diesen gegen die Schiene innerhalb des Aufnahmeraums der Halteeinrichtung. Ein Herausrutschen des Temperaturfühlers aus der Halteeinrichtung wird durch eine kleine Kante an der Halteeinrichtung verhindert. Dieses Fügekonzept ist jedoch sehr aufwendig, da die Aussparung, in die das Werkzeug eingeführt werden muss, aus Gründen des Bauraums für die Halteeinrichtung möglichst klein sein soll. Hierdurch ist die Handhabung des Werkzeugs schwierig.

Eine Sensoranordnung gemäß dem Oberbegriff von Patentanspruch 1 ist aus DE 10 2019 121 198 A1 bekannt. Diese bekannte Sensoranordnung hat einen Temperatursensorabschnitt mit einem Temperatursensor. Der Temperatursensorabschnitt hat ein Sensorgehäuse, das in eine Gehäuseaufnahme mittels Rast- oder Klemmverbindung eingesetzt ist. Dazu sind am Sensorgehäuse seitlich zwei Federarme mit Rastelementen vorgesehen, die in der Gehäuseöffnung verklemmen. Weiterhin ist am Sensorgehäuse ein Federelement zur Anfederung des Sensorgehäuses mit Temperatursensor an das in seiner Temperatur zu messende Element.

Weitere Lösungsansätze für Sensoranordnungen mit einem Temperaturfühler sind aus DE 10 2020 001 007 A1, DE 10 2019 123 856 A1 und DE 10 2017 222 543 A1 bekannt.

Davon ausgehend liegt der Erfindung die Aufgabe zu Grunde, alternative Lösungen aufzuzeigen, welche bei kompakter Bauweise eine einfache und schnelle Befestigung eines Temperaturfühlers an einer Schiene oder dergleichen ermöglichen.

Diese Aufgabe wird durch eine Sensoranordnung gemäß Patentanspruch 1 gelöst.

Im Vergleich zu der Sensoranordnung gemäß DE 10 2020 215 884 A1 sind somit bei der Montage an einer Schiene letztlich nur noch zwei Bauteile miteinander zu fügen. Ein Montagewerkzeug zum Aufspreizen des Federelements so wie eine entsprechende Aussparung an der Halteeinrichtung werden hierbei nicht mehr benötigt. Zudem kann die Temperaturfühlereinheit unschwer ausgetauscht werden. Dies ist nicht nur im Kundendienstfall hilfreich, sondern beispielsweise auch bei der Motorentwicklung. Die Halteeinrichtung kann dabei an der Schiene verbleiben.

Im eingeschobenen Zustand der Temperaturfühlereinheit ist der Arretierungsabschnitt mit einem Rasthaken der Halteeinrichtung verrastet. Zudem ist das Federelement zwischen einer Seitenwand des Aufnahmeraums und dem Temperaturfühlerabschnitt angeordnet, stützt sich an der Seitenwand des Aufnahmeraums ab und drängt den Temperaturfühlerabschnitt in Richtung der gegenüberliegenden Seitenwand des Aufnahmeraums. Hierdurch kann der Temperaturfühlerabschnitt zuverlässig in Kontakt mit der durch den Aufnahmeraum verlaufenden Schiene gehalten werden.

Die Halteeinrichtung kann dabei grundsätzlich in beliebiger Art und Weise an der Schiene befestigt sein. In einer Ausführungsvariante, jedoch ohne Beschränkung hierauf, ist es möglich, die Halteeinrichtung an die Schiene anzustecken und an dieser zu verrasten. Vorzugsweise kann dabei auf die Ausbildung komplexer Verrastungsstrukturen auf Seiten der Schiene oder weiterer umgebender Bauteile verzichtet werden.

Die erfindungsgemäße Sensoranordnung lässt sich mit geringem Zeitaufwand und hoher Prozesssicherheit an einer Schiene montieren. Sie zeichnet sich durch einen kompakten Aufbau aus und gestattet einen einfachen Austausch der Temperaturfühlereinheit.

Bei einer optional manuellen Montage erhält der Werker über das Verrasten der Temperaturfühlereinheit in der Halteeinrichtung eine direkte Rückmeldung - haptisch und/oder akustisch - über den korrekten Sitz der Temperaturfühlereinheit in der Halteeinrichtung.

Weitere besondere Ausführungsarten der Erfindung sind Gegenstand weiterer Patentansprüche.

So kann beispielsweise die Halteeinrichtung einen Endanschlag für die Einschubtiefe der Temperaturfühlereinheit ausbilden, um die Montage der Temperaturfühlereinheit weiter zu erleichtern.

Vorzugsweise besteht die Halteeinrichtung aus Kunststoff, wodurch Gewicht und Materialressourcen geschont werden.

Vorzugsweise ist die Halteeinrichtung im Hinblick auf eine kostengünstige Fertigung großer Stückzahlen wie im Kraftfahrzeugbau als Spritzgussteil ausgebildet.

Gemäß einer weiteren besonderen Ausführungsart ist das Federelement mit dem Temperaturfühlerabschnitt verpresst oder verschweißt, um eine bei der Montage gut handhabbare Einheit zu bilden. Alternativ kann das Federelement zum Zweck der Festlegung an dem Temperaturfühlerabschnitt auch mit Kunststoff des Temperaturfühlerabschnitts umspritzt sein.

Gemäß einer weiteren besonderen Ausführungsart ist das Federelement U-förmig mit einem ersten Schenkel und einem zweiten Schenkel ausgebildet. Hierbei ist der erste Schenkel an dem Temperaturfühlerabschnitt anliegend fixiert, wohingegen der zweite Schenkel als freie Federlasche ein- und ausfederbar ist, um sich an einer Seitenwand des Aufnahmeraums der Halteeinrichtung abzustützen.

Weiterhin kann zwischen dem Temperaturfühlerabschnitt und der Seitenwand, in Richtung welcher der Temperaturfühlerabschnitt durch das Federelement gedrängt wird, innerhalb des Aufnahmeraums der Halteeinrichtung ein Aufnahmebereich für die Schiene vorgesehen sein, wodurch es möglich ist, den Temperaturfühlerabschnitt unmittelbar gegen die Schiene zu drängen, um hierdurch eine sehr genaue Erfassung der Temperatur derselben zu erhalten.

Gemäß einer weiteren besonderen Ausführungsart weist der Arretierungsabschnitt zwei gegenüberliegende Außenflächen auf, welche im eingeschobenen Zustand der Temperaturfühlereinheit in den Aufnahmeraum parallel zu gegenüberliegenden Seitenwänden des Aufnahmeraums der Halteeinrichtung verlaufen und von diesen durch einen Spalt beabstandet sind, wobei eine der Außenflächen auf Seiten des Federelements angeordnet ist und die andere Außenfläche auf Seiten des Aufnahmebereichs für die Schiene angeordnet ist. Auf diese Weise wird ein zuverlässiges Anlegen des Temperaturfühlerabschnitts gegen die Schiene gewährleistet.

Weiterhin kann an dem Arretierungsabschnitt eine Stufe ausbildet sein, mit welcher der Rasthaken der Halteeinrichtung im eingeschobenen Zustand der Temperaturfühlereinheit in Eingriff steht, um die Temperaturfühlereinheit gegen Herausziehen zu sichern. Über die Stufe lässt sich die erforderliche Bauhöhe der Halteeinrichtung verringern.

Nachfolgend wird die Erfindung anhand eines möglichen Ausführungsbeispiels näher erläutert. Die Zeichnung zeigt in:
- Figur 1: eine Schnittansicht eines Ausführungsbeispiels einer Sensoranordnung nach der Erfindung im montierten Zustand an einer Schiene,
- Figur 2: eine räumliche Ansicht der Sensoranordnung gemäß Figur 1 in einer Teilschnittansicht ohne Darstellung der Schiene,
- Figur 3: eine Detailansicht der Verrastung der Temperaturfühlereinheit der Sensoranordnung an der Halteeinrichtung derselben,
- Figur 4: eine räumliche Ansicht lediglich der Halteeinrichtung der Sensoranordnung gemäß Figur 1 von vorne,
- Figur 5: eine räumliche Ansicht der Halteeinrichtung von hinten,
- Figur 6: eine räumliche Ansicht der Halteeinrichtung von der Befestigungsseite der Schiene,
- Figur 7: eine Längsschnittansicht der Halteeinrichtung,
- Figur 8: eine räumliche Ansicht lediglich der Temperaturfühlereinheit der Sensoranordnung gemäß Figur 1,
- Figur 9: eine weitere räumliche Ansicht der Temperaturfühlereinheit in einer gegenüber Figur 8 um die Längsachse derselben um 90° gedrehten Blickrichtung,
- Figur 10: eine Längsschnittansicht der Temperaturfühlereinheit, und in
- Figur 11: eine Darstellung lediglich des Federelements der Temperaturfühlereinheit.

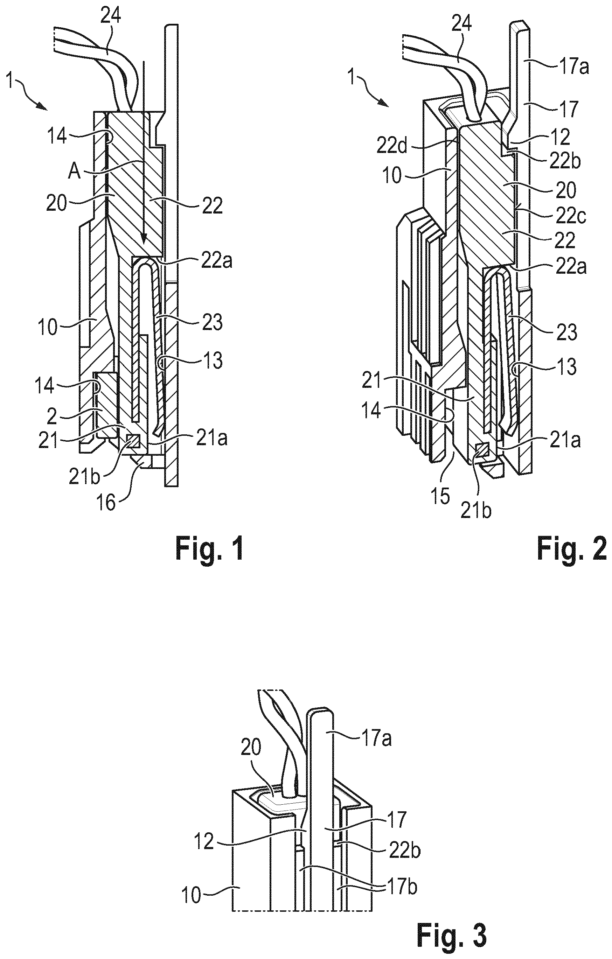

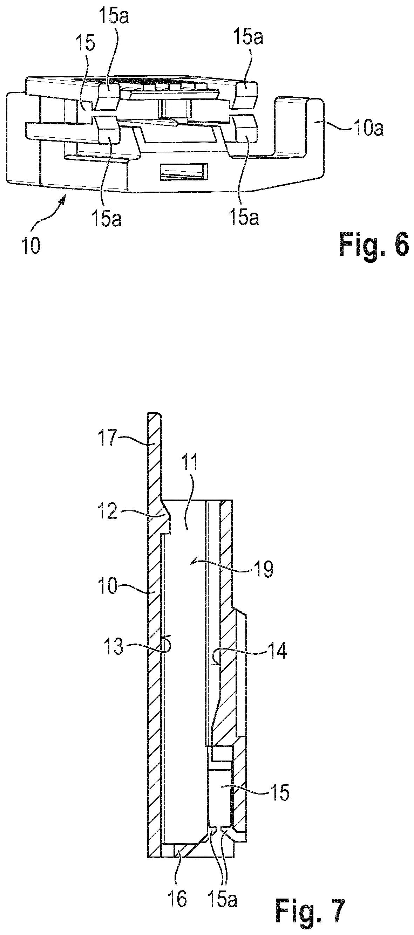

Das nachfolgend anhand der Figuren 1 bis 11 dargestellte Ausführungsbeispiel zeigt eine Sensoranordnung 1 zur Erfassung der Temperatur einer Schiene 2.

Die Sensoranordnung 1 umfasst dabei sowohl Mittel zur Erfassung der Temperatur als auch Mittel zur Befestigung an der Schiene 2, so dass die Schiene 2 mit einem einfachen Querschnittsprofil ausgeführt werden und auf komplexe Befestigungsstrukturen an der Schiene 2 selbst verzichtet werden kann.

Die Befestigungsmittel sowie die Temperaturerfassungsmittel sind dabei als separate Einheiten ausgebildet, welche lösbar aneinander befestigt sind. Hierdurch ist es möglich, die Temperaturerfassungsmittel von den Befestigungsmitteln zu trennen, wobei die Befestigungsmittel an der Schiene 2 verbleiben können.

Die Schiene 2 kann beispielsweise ein stromführender Leiter eines Elektromotors oder dergleichen sein. Jedoch kann eine Befestigung auch an anderen schienen- oder leistenförmigen Bauteilen erfolgen.

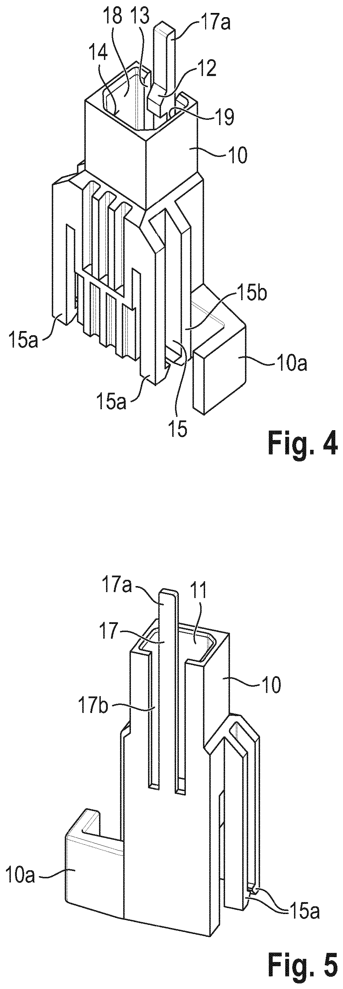

Bei dem dargestellten Ausführungsbeispiel umfasst die Sensoranordnung 1 als Befestigungsmittel eine Halteeinrichtung 10 zur Befestigung an der Schiene 2, die insbesondere in den Figuren 4 bis 6 näher dargestellt ist.

Weiterhin umfasst die Sensoranordnung 1 als Temperaturerfassungsmittel eine Temperaturfühlereinheit 20, welche an der Halteeinrichtung 10 sowohl klemmend als auch lösbar gehalten ist.

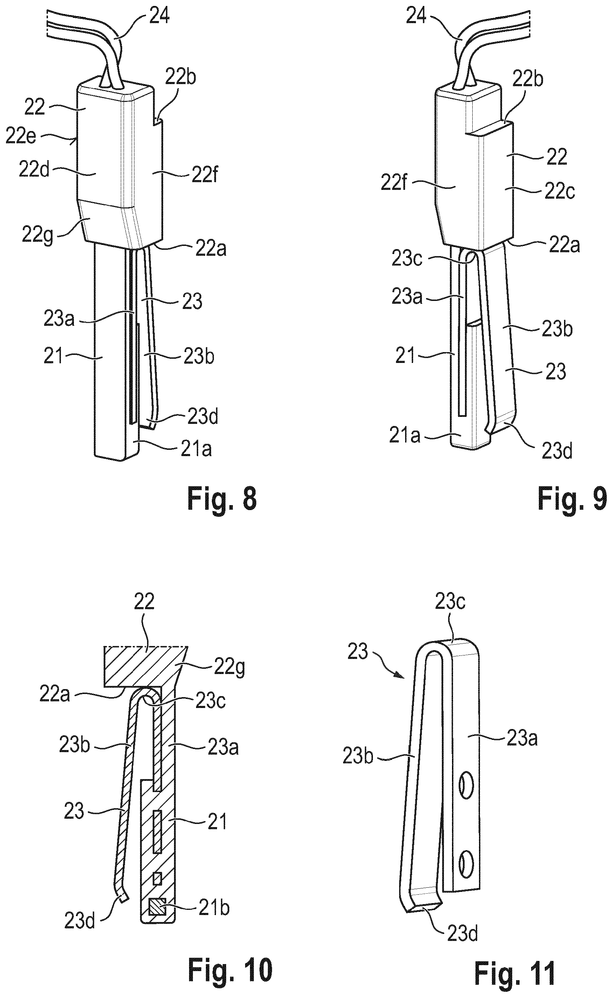

Die in den Figuren 8 bis 11 näher dargestellte Temperaturfühlereinheit 20 umfasst insbesondere einen Temperaturfühlerabschnitt 21, einen Arretierungsabschnitt 22 und ein Federelement 23. Die Temperaturfühlereinheit 20 ist als Einheit in einen Aufnahmeraum 11 der Halteeinrichtung 10 einschiebbar.

Bei der Montage der Sensoranordnung 1 an der Schiene 2 sind dementsprechend lediglich zwei Bauteile zu handhaben, nämlich die Halteeinrichtung 10 einerseits und die Temperaturfühlereinheit 20 andererseits.

Die Halteeinrichtung 10 stellt dabei die für die Festlegung an der Schiene 2 benötigten Haltestrukturen für die Temperaturfühlereinheit 20 an der Schiene 2 zur Verfügung.

Diese Bauteile, nämlich die Halteeinrichtung 10 und die Temperaturfühlereinheit 20, sind vorzugsweise derart ausgestaltet, dass diese ohne Zusatzwerkzeug von Hand gefügt werden können. Dies gilt sowohl für die Befestigung der Halteeinrichtung 10 an der Schiene 2, als auch für die Befestigung der Temperaturfühlereinheit 20 an der Halteeinrichtung 10. Es ist auch möglich, einen oder beide Montageschritte automatisiert vorzunehmen.

Bei der Montage wird die Temperaturfühlereinheit 20 in den Aufnahmeraum 11 innerhalb der Halteeinrichtung 10 eingeschoben. Vorzugsweise erfolgt dies in einer Linearbewegung gemäß Pfeilrichtung in Figur 1, welche die Einschubrichtung A kennzeichnet.

Im eingeschobenen Zustand der Temperaturfühlereinheit 20 ist die Temperaturfühlereinheit 20 an ihrem Arretierungsabschnitt 22 mit einem Rasthaken 12 der Halteeinrichtung 10 verrastet, so dass die Temperaturfühlereinheit 20 nach ihrem Einschieben in den Aufnahmeraum 11 nicht mehr ohne weiteres entgegen der Pfeilrichtung A aus dem Aufnahmeraum 11 herausgezogen werden kann.

Ferner ist im eingeschobenen Zustand der Temperaturfühlereinheit 20 das Federelement 23 zwischen einer Seitenwand 13 des Aufnahmeraums 11 und dem Temperaturfühlerabschnitt 21 angeordnet. Dabei stützt sich das Federelement 23 an der Seitenwand 13 des Aufnahmeraums 11 ab und drängt den Temperaturfühlerabschnitt 21 der Temperaturfühlereinheit 20 in Richtung der gegenüberliegenden Seitenwand 14 des Aufnahmeraums 11.

Zwischen besagter gegenüberliegender Seitenwand 14 und dem Temperaturfühlerabschnitt 21 ist in dem Aufnahmeraum 11 ein Aufnahmebereich 15 zur Aufnahme der Schiene 2 vorgesehen. Somit wird letztlich im montierten Zustand der Temperaturfühlerabschnitt 21 durch das Federelement 23 in Anlage gegen die Schiene 2 gedrängt. Hierdurch ist eine sehr präzise Erfassung der Temperatur der Schiene 2 möglich.

Der Temperaturfühlerabschnitt 21 kann ein Gehäuse 21a sowie einen in diesen eingebetteten Temperaturfühler 21b aufweisen.

Der Temperaturfühler 21b kann nach bekannten Messprinzipien zur Temperaturerfassung arbeiten. Beispielsweise kann der Temperaturfühler 21b ein sogenannter NTC-Sensor sein, d.h. ein Temperaturfühler mit negativem Temperaturkoeffizienten. Mögliche Umsetzungen erfolgen beispielsweise mit einem Thermoelement oder einem Platinmesswiderstand. Alternativ können auch sogenannte PTC-Sensoren mit positivem Temperaturkoeffizient oder, wie bereits gesagt, Sensoren nach anderen Messprinzipien zum Einsatz kommen.

An den Temperaturfühlerabschnitt 21 schließt der Arretierungsabschnitt 22 axial an. Eine elektrische Verbindung des Temperaturfühlers 21b kann durch den Arretierungsabschnitt 22 hindurchgeführt sein, wie dies in Figur 1 durch entsprechenden Kabel 24 lediglich angedeutet ist.

In einer Ausführungsvariante sind der Arretierungsabschnitt 22 und das Gehäuse 21a des Temperaturfühlerabschnitts 21 einstückig ausgebildet.

Insbesondere können diese Abschnitte, nämlich der Arretierungsabschnitt 22 und das Gehäuse 21a, aus einem Kunststoff gefertigt sein. Vorzugsweise sind diese Abschnitte spritzgusstechnisch hergestellt, wobei der Temperaturfühler 21b und Abschnitte der Kabel 24 entsprechend umspritzt sein können.

Zudem kann das Federelement 23 entsprechend durch Umspritzen an dem Temperaturfühlerabschnitt 21 festgelegt sein.

Es ist jedoch auch möglich, dass das Federelement 23 mit dem Temperaturfühlerabschnitt 21 verpresst oder verschweißt ist.

Das Federelement 23 erstreckt sich vorzugsweise in Einschubrichtung A entlang des Temperaturfühlerabschnitts 21 und endet dabei vor einem einschubseitigen Vorsprung 22a des Arretierungsabschnitts 22.

Überdies kann das Federelement 23 quer zur Einschubrichtung A etwas über den einschubseitigen Vorsprung 22a hinausragen, so dass dieses beim Einschieben der Temperaturfühlereinheit 20 beim Kontakt mit der Seitenwand 13 des Aufnahmeraums 11 der Halteeinrichtung 10 etwas zusammengedrückt wird und damit einfedert.

In einer Ausführungsvariante kann das Federelement 23 wie in Figur 11 beispielhaft dargestellt U-förmig mit einem ersten Schenkel 23a und einem zweiten Schenkel 23b ausgebildet sein. Beide Schenkel 23a und 23b können über einen Bogenabschnitt 23c einstückig miteinander verbunden sein. Der Bogenabschnitt 23c ist vorzugsweise an den einschubseitigen Vorsprung 22a des Arretierungsabschnitts 22 angrenzend angeordnet.

Der erste Schenkel 23a kann an dem Temperaturfühlerabschnitt 21 anliegend fixiert sein beispielsweise durch Umspritzen mit Kunststoff oder in sonstiger Weise, wie beispielsweise vorstehend beschrieben, wohingegen der zweite Schenkel 23b als freie Federlasche ein- und ausfederbar ist, um sich an der Seitenwand 13 des Aufnahmeraums 11 abzustützen.

Ein freier Endabschnitt 23d des Federelements 23 ist vorzugsweise quer zur Einschubrichtung A unter den einschubseitigen Vorsprung 22a zurückgezogen, um das Einführen der Temperaturfühlereinheit 20 in den Aufnahmeraum 11 der Halteeinrichtung 10 zu erleichtern.

Das Federelement 23 kann beispielsweise als zweischenklige Blattfeder ausgeführt sein, deren erster Schenkel 23a sich längs des Temperaturfühlerabschnitts 21 an der der Schiene 2 gegenüberliegenden Seite erstreckt.

Das Federelement 23 ist vorzugsweise aus Metall hergestellt. Eine Ausführung aus Kunststoff ist ebenfalls möglich.

Ferner ist es möglich, das Federelement 23 einstückig in das Gehäuse 21a des Temperaturfühlerabschnitts 21 zu integrieren.

Die Halteeinrichtung 10 kann ferner einen Endanschlag 16 aufweisen oder ausbilden, durch welchen die Einschubtiefe der Temperaturfühlereinheit 20 in den Aufnahmeraum 11 in Einschubrichtung A axial begrenzt wird.

Die Position des Rasthakens 12 der Halteeinrichtung 10 ist vorzugsweise derart auf die Temperaturfühlereinheit 20 abgestimmt, um nach einem Anschlagen der Temperaturfühlereinheit 20 gegen den Endanschlag 16 die Temperaturfühlereinheit 20 gegen ein Herausziehen aus dem Aufnahmeraum 11 zu sichern. Beim Einschieben der Temperaturfühlereinheit 20 in den Aufnahmeraum wird der Rasthaken 12 elastisch etwas zur Seite gedrückt, um nach Erreichen der Montageposition der Temperaturfühlereinheit 20 in dem Aufnahmeraum 11 zurückzufedern und damit die Temperaturfühlereinheit 20 in der Halteeirichtung entgegen der Einschubrichtung A zu verriegeln.

Die Begrenzung der Montageposition der Temperaturfühlereinheit 20 in der Halteeinrichtung wird bei dem vorliegenden Ausführungsbeispiel durch den Endanschlag 16 definiert, welcher vorliegend mit einem freien Endabschnitt des Temperaturfühlerabschnitts 21 in Eingriff gelangt. Ein Endanschlag kann jedoch auch für einen entsprechenden Abschnitt des Arretierungsabschnitts 22 vorgesehen sein. Ferner kann ein Endanschlag zur Definition der Montageposition auch auf andere Art und Weise vorgegeben sein. Gegebenenfalls kann ein Endanschlag 16 auch gänzlich entfallen.

Der Rasthaken 12 zum Verrasten mit dem Arretierungsabschnitt 22 ist an einer an der Halteeinrichtung 10 angebrachten oder ausgebildeten auslenkbaren Lasche 17 angeordnet, wobei durch Auslenkung der Lasche 17 die Temperaturfühlereinheit 20 entriegelbar ist und im entriegelten Zustand aus dem Aufnahmeraum 11 herausziehbar ist.

Vorzugsweise ragt die Lasche 17 mit ihrem freien Ende 17a zur Einschubseite hin über den Rasthaken 12 hinaus, so dass der Rasthaken 12 bei einer Demontage der Temperaturfühlereinheit 20 leicht erreichbar ist.

Vorzugsweise ist die Lasche 17 durch einen Wandabschnitt der Halteeinrichtung 10 gebildet. Sie kann beidseits des Rasthakens 12 durch parallele Schlitze 17b von der Seitenwand 13 abgegrenzt sein, wobei sich die Schlitze 17b in Einschubrichtung A über die Position des Rasthaken 12 hinaus erstrecken. Hierdurch ergibt sich eine weich-elastische Zunge, deren Widerstand beim Einschieben der Temperaturfühlereinheit 20 in den Aufnahmeraum 11 leicht überwunden werden kann. Das Zurückfedern kann bei der Montage ein wahrnehmbares optisches und/oder akustisches Feedbacksignal in Bezug auf einen korrekten Einbau erzeugen.

An dem Arretierungsabschnitt 22 kann für den Eingriff mit dem Rasthaken 12 an dem Arretierungsabschnitt eine Stufe 22b ausbildet sein, mit welcher der Rasthaken 12 der Halteeinrichtung 10 im eingeschobenen Zustand der Temperaturfühlereinheit 20 in Eingriff steht, um die Temperaturfühlereinheit 20 gegen Herausziehen zu sichern. Durch die Stufe 22b verkürzt sich die Länge der Halteeinrichtung 10 in Einschubrichtung A.

Weiterhin kann der Arretierungsabschnitt 22 zwei gegenüberliegende Außenflächen 22c und 22d aufweisen, welche im eingeschobenen Zustand der Temperaturfühlereinheit 20 in den Aufnahmeraum 11 den Seitenwänden 13 und 14 des Aufnahmeraums 11 der Halteeinrichtung 10 gegenüberliegen. Vorzugsweise verlaufen die Außenflächen 22c und 22d parallel zu den Seitenwänden 13 und 14, wobei ein kleiner Spalt vorgesehen ist, um eine maßliche Überbestimmung zu vermeiden und ein zuverlässiges Anpressen des Federelements 23 zu gewährleisten.

Ein Spiel durch den Abstand kann insgesamt vorzugsweise in der Größenordnung von etwa einem Zentel Millimeter bis etwa zwei Millimetern liegen.

Vorzugsweise ist eine der Außenflächen 22c auf Seiten des Federelements 23 angeordnet und die andere Außenfläche 22d auf Seiten des Aufnahmebereichs 15 für die Schiene 2 angeordnet.

Weiterhin kann der Arretierungsabschnitt 22 zusätzliche Außenflächen 22e und 22f aufweisen, welche mit den vorgenannten Außenflächen 22c und 22d im Querschnitt des Arretierungsabschnitts 22 einen rechten Winkel einschließen und einander ebenfalls gegenüberliegen. Diese zusätzlichen Außenflächen 22e und 22f liegen im eingeschobenen Zustand der Temperaturfühlereinheit 20 Seitenwänden 18 und 19 des Aufnahmeraums 11 vorzugsweise parallel gegenüber, welche jeweils die vorgenannten Seitenwände 13 und 14 des Aufnahmeraums 11 verbinden und einander entsprechend gegenüberliegen, entweder mit kleinem Abstand wie die vorgenannten Außenflächen 22c und 22d oder aber in Flächenkontakt. Mit anderen Worten, eine Aussparung für ein Montagewerkzeug ist bei dem vorliegenden Ausführungsbeispiel vorzugsweise nicht vorhanden oder vorgesehen. Hierdurch kann die Temperaturfühlereinheit 20 quer zur Einschubrichtung A fixiert werden.

Ein Einführen der Temperaturfühlereinheit 20 in den Aufnahmeraum 11 wird ferner begünstigt durch eine an dem Arretierungsabschnitt 22 ausgebildete Schrägfläche 22g, welche von der Führungsfläche 22d zu dem Temperaturfühlerabschnitt 21 hin abfällt.

Für die vorstehend erläuterte Sensoranordnung 1 werden die Halteeinrichtung 10 und die Temperaturfühlereinheit 20 zunächst als separate Einheiten hergestellt.

Die Halteeinrichtung 10 besteht vorzugsweise aus Kunststoff. Sie lässt sich insbesondere als Spritzgussteil in großen Stückzahlen wirtschaftlich herstellen. Die diesbezüglich vorstehend erläuterten Geometriemerkmale derselben sind hierbei bevorzugt sämtlich einstückig in das betreffende Bauteil integriert.

Zudem können an der Halteeinrichtung 10 Befestigungsmittel zur Festlegung derselben an der Schiene 2 ausgebildet sein. In dem dargestellten Ausführungsbeispiel sind hierzu weitere Rasthaken 15a dargestellt, welche jedoch lediglich dazu dienen, einen möglichen Weg zur Festlegung der Halteeinrichtung 10 an der Schiene 2 aufzuzeigen.

Diese weiteren Rasthaken 15a können sich beidseits des Aufnahmebereichs 15 des Aufnahmeraums 11 erstrecken. Durch solche oder ähnliche Klemmmittel kann die Halteeinrichtung 10 sehr einfach an der Schiene 2 befestigt werden und bei einem etwaigen Austausch der Temperaturfühlereinheit 20 an der Schiene 2 verbleiben. Das Querschnittsprofil der Schiene 2 braucht hierdurch nicht mit gesonderten dezidierten Befestigungsstrukturen für einen Temperaturfühler ausgebildet werden. Vielmehr werden solche Befestigungsstrukturen vorliegend durch die einfach an der Schiene 2 fixierte Halteeinrichtung 10 bereitgestellt.

An die Halteeinrichtung kann ferner ein Vorsprung 10a angeformt sein, welcher dem Aufnahmebereich 15 für die Schiene 2 vorgelagert ist. Hierdurch kann bei einer Befestigung an einem Schienenende die Lage der Halteeinrichtung 10 relativ zur Schiene 2 vorgegeben werden. Zudem kann ein solcher Vorsprung 10a das Aufpressen der Halteeinrichtung 10 auf die Schiene 2 erleichtern.

Für die Temperaturfühlereinheit 20 können ein entsprechender Temperaturfühler 21b mit zugehörigem Kabel 24 und gegebenenfalls ein separates Federelement 23 mit den weiteren, vorzugsweise aus Kunststoff bestehenden Abschnitten zu einer Einheit verbunden werden. Diese Einheit kann als fertiges Bauteil für die Montage an der Schiene 2 bereitgestellt werden.

Für die eigentliche Montage der Sensoranordnung 1 an der Schiene 2 wird zunächst die Halteeinrichtung 10 an der Schiene 2 befestigt, beispielsweise angeklemmt.

Die Temperaturfühlereinheit 20 kann dann ohne die Notwendigkeit zusätzlicher Werkzeuge zum Aufspreizen oder dergleichen in die Ausnehmung der Halteeinrichtung 10 gesteckt werden, bis der Rasthaken 12 der Halteeinrichtung 10 merklich mit der Temperaturfühlereinheit 20 verrastet.

Aufgrund der vorstehend erläuterten Ausgestaltung der Temperaturfühlereinheit 20 wird deren Temperaturfühlerabschnitt 21 durch das Federelement 23 zuverlässig in Anlage gegen die Schiene 2 gedrängt.

Soll die Temperaturfühlereinheit 20 wieder entfernt werden, so ist hierfür lediglich der Rasthaken 12, beispielsweise durch Betätigung der Lasche 17 zu verschwenken, so dass die Temperaturfühlereinheit 20 unschwer aus der Ausnehmung 11 herausgezogen werden kann.

Für den Einsatz einer neuen Temperaturfühlereinheit 20 kann die Halteeinrichtung 10 an der Schiene 2 verbleiben und für die neue Temperaturfühlereinheit 20 wieder verwendet werden. Hierdurch werden in Bezug auf die Befestigungsmittel bei einem Austausch der Temperaturfühlereinheit 20 Ressourcen eingespart, wodurch sich die vorstehend erläuterte Lösung auch durch eine hohe Nachhaltigkeit auszeichnet.

Vor allem aber ermöglicht die vorstehend erläuterte Lösung eine einfache und kostengünstige Anbindung eines Temperaturfühlers an eine Schiene 2 wie beispielsweise einen stromführenden Leiter eines Elektromotors, welche sich durch sehr geringe Prozesszeiten auszeichnet.

Überdies kann mit der vorstehend erläuterten Lösung eine gute Abschirmung des Temperaturfühlers gegen den Kontakt mit Flüssigkeiten wie beispielsweise Kühlöl oder dergleichen erzielt werden .

Dies ermöglicht wiederum einen Elektromotor mit einer Sensoranordnung 1 der vorstehend erläuterten Art, bei welchem Strukturen zur Temperaturmessung, insbesondere an einem elektrischen Leiter desselben, vor allem fertigungs- und montagetechnisch vorteilhaft durch die beschriebene Sensoranordnung 1 verwirklicht sind.

Bei dem dargestellten Ausführungsbeispiel sind das Gehäuse 21a des Temperaturfühlerabschnitt 21 und des Arretierungsabschnitts 22 vorzugsweise aus dem gleichen Kunststoff und in einem Stück hergestellt. In Anwandlung hiervon können der Temperaturfühlerabschnitt 21 und der Arretierungsabschnitts 22 jedoch auch mit unterschiedlichen Kunststoffen hergestellt sein, beispielsweise in einem Zweikomponenten-Spritzgussverfahren. Weiterhin können die Abschnitte 21, 22 auch separat gefertigt und dann miteinander zu einem Bauteil verbunden worden sein.

Ferner sind der Temperaturfühlerabschnitt 21 und der Arretierungsabschnitt 22 vorzugsweise starr zueinander. Zur Vermeidung einer mechanischen Überbestimmtheit ist das oben erläuterte Spiel zu den Seitenwänden 13, 14 vorgesehen. In Abwandlung des Ausführungsbeispiels kann zwischen dem Temperaturfühlerabschnitt 21 und dem Arretierungsabschnitt 22 ein Gelenk vorgesehen sein, welches eine gewisse Kippbeweglichkeit zwischen beiden Abschnitten 21, 22 erlaubt. In diesem Fall kann das Spiel sehr klein gewählt werden oder praktisch entfallen, so dass die Seitenwände 13, 14 als Führungsflächen für die korrespondierenden Außenflächen 22c und 22d am Arretierungsabschnitt 22 dienen können.

Die Erfindung wurde vorstehend anhand eines Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel und die Abwandlungen beschränkt, sondern umfasst alle durch die Patentansprüche definierten Ausgestaltungen.

### Bezugszeichenliste

- 1: Sensoranordnung
- 2: Schiene
- 10: Halteeinrichtung
- 11: Aufnahmeraum
- 12: Rasthaken
- 13: Seitenwand des Aufnahmeraums 11
- 14: weitere Seitenwand, der Seitenwand 13 gegenüberliegend
- 15: Aufnahmebereich für die Schiene 2
- 15a: weiterer Rasthaken
- 15b: weiterer Rasthaken
- 16: Endanschlag
- 17: Lasche
- 17a: freier Endabschnitt der Lasche
- 18: weitere Seitenwand des Aufnahmeraums 11, rechtwinklig zu den Seitenwänden 13 und 14
- 19: weitere Seitenwand, der Seitenwand 18 gegenüberliegend
- 20: Temperaturfühlereinheit
- 21: Temperaturfühlerabschnitt
- 21a: Gehäuse
- 21b: Temperaturfühler
- 22: Arretierungsabschnitt
- 22a: einschubseitiger Vorsprung
- 22b: Stufe
- 22c: Außenfläche
- 22d: weitere Außenfläche, der Außenfläche 22c gegenüberliegend
- 22e: weitere Außenfläche, rechtwinklig zu den Außenflächen 22c und 22d
- 22f: weitere Außenfläche, der Außenfläche 22e gegenüberliegend
- 22g: Schrägfläche
- 23: Federelement
- 23a: erster Schenkel
- 23b: zweiter Schenkel
- 23c: Bogenabschnitt
- 23d: Endabschnitt
- 24: Kabel
- A: Einschubrichtung

## Patentansprüche

1. Sensoranordnung, umfassend
eine Halteeinrichtung (10) zur Befestigung an einer Schiene (2), und
eine Temperaturfühlereinheit (20), welche an der Halteeinrichtung (10) klemmend und lösbar gehalten ist,
wobei die Temperaturfühlereinheit (20) einen Temperaturfühlerabschnitt (21), einen Arretierungsabschnitt (22) und ein Federelement (23) umfasst und als Einheit in einen Aufnahmeraum (11) der Halteeinrichtung (10) einschiebbar ist,
wobei im eingeschobenen Zustand der Temperaturfühlereinheit (20) der Arretierungsabschnitt (22) mit der Halteeinrichtung (10) verrastet ist und das Federelement (23) zwischen einer Seitenwand (13) des Aufnahmeraums (11) und dem Temperaturfühlerabschnitt (21) angeordnet ist, sich an besagter Seitenwand (13) des Aufnahmeraums (11) abstützt und den Temperaturfühlerabschnitt (21) in Richtung der gegenüberliegenden Seitenwand (14) des Aufnahmeraums (11) drängt,
**dadurch gekennzeichnet, dass**
die Halteeinrichtung (10) zum Verrasten mit dem Arretierungsabschnitt (22) einen Rasthaken (12) aufweist, der an einer an der Halteeinrichtung (10) ausgebildeten auslenkbaren Lasche (17) an besagter Seitenwand (13) des Aufnahmeraums (11), an welcher sich im eingeschobenen Zustand der Temperaturfühlereinheit (20) das Federelement (23) der Temperaturfühlereinheit (20) abstützt, angeordnet ist, wobei durch Auslenkung der Lasche (17) die Temperaturfühlereinheit (20) entriegelbar ist und im entriegelten Zustand aus dem Aufnahmeraum (11) herausziehbar ist.

2. Sensoranordnung nach Anspruch 1, **dadurch gekennzeichnet, dass** die Halteeinrichtung (10) einen Endanschlag (16) für die Einschubtiefe der Temperaturfühlereinheit (20) ausbildet.

3. Sensoranordnung nach Anspruch 1 oder 2, **dadurch gekennzeichnet, dass** die auslenkbare Lasche (17) beidseits des Rasthakens (12) durch parallele Schlitze (17b) von besagter Seitenwand (13) abgegrenzt ist und sich die Schlitze (17b) in Einschubrichtung (A) über die Position des Rasthaken (12) hinaus erstrecken.

4. Sensoranordnung nach einem der Ansprüche 1 bis 3, **dadurch gekennzeichnet, dass** die Halteeinrichtung (10) aus Kunststoff besteht.

5. Sensoranordnung nach einem der Ansprüche 1 bis 4, **dadurch gekennzeichnet, dass** die Halteeinrichtung (10) ein Spritzgussteil ist.

6. Sensoranordnung nach einem der Ansprüche 1 bis 5, **dadurch gekennzeichnet, dass** das Federelement (23) mit dem Temperaturfühlerabschnitt (21) verpresst oder verschweißt ist oder mit Kunststoff des Temperaturfühlerabschnitts (21) umspritzt ist.

7. Sensoranordnung nach einem der Ansprüche 1 bis 6, **dadurch gekennzeichnet, dass** das Federelement (23) U-förmig mit einem ersten Schenkel (23a) und einem zweiten Schenkel (23b) ausgebildet ist, wobei der erste Schenkel (23a) an dem Temperaturfühlerabschnitt (21) anliegend fixiert ist und der zweite Schenkel (23b) als freie Federlasche ein- und ausfederbar ist.

8. Sensoranordnung nach einem der Ansprüche 1 bis 7, **dadurch gekennzeichnet, dass** zwischen dem Temperaturfühlerabschnitt (21) und der Seitenwand (14), in Richtung welcher der Temperaturfühlerabschnitt (21) durch das Federelement (23) gedrängt wird, innerhalb des Aufnahmeraums (11) der Halteeinrichtung (10) ein Aufnahmebereich (15) für die Schiene (2) vorgesehen ist.

9. Sensoranordnung nach Anspruch 8, **dadurch gekennzeichnet, dass** der Arretierungsabschnitt 22) zwei gegenüberliegende Außenflächen (22c, 22d) aufweist, welche im eingeschobenen Zustand der Temperaturfühlereinheit (20) in den Aufnahmeraum (11) zu einander gegenüberliegenden Seitenwänden (13, 14) des Aufnahmeraums (11) parallel verlaufen und von diesen durch einen Spalt beabstandet sind, wobei eine der Außenflächen (22c) auf Seiten des Federelements (23) angeordnet ist und die andere Außenfläche (22d) auf Seiten des Aufnahmebereichs (15) für die Schiene (2) angeordnet ist.

10. Sensoranordnung nach einem der Ansprüche 1 bis 9, **dadurch gekennzeichnet, dass** der Arretierungsabschnitt (22) eine Stufe (22b) ausbildet, mit welcher der Rasthaken (12) der Halteeinrichtung (10) im eingeschobenen Zustand der Temperaturfühlereinheit (20) in Eingriff steht, um die Temperaturfühlereinheit (20) gegen Herausziehen zu sichern.

## Claims

1. Sensor assembly, comprising
a retaining device (10) for attachment to a rail (2), and
a temperature sensor unit (20) which is clamped and releasably held on the retaining device (10),
wherein the temperature sensor unit (20) comprises a temperature sensor portion (21), a locking portion (22) and a spring element (23) and can be inserted as a unit into a receiving space (11) of the retaining device (10),
wherein,when the temperature sensor unit (20) is inserted, the locking portion (22) is latched in the retaining device (10) and the spring element (23) is arranged between a side wall (13) of the receiving space (11) and the temperature sensor portion (21), is supported on said side wall (13) of the receiving space (11) and pushes the temperature sensor portion (21) toward the opposite side wall (14) of the receiving space (11),
**characterized in that**
the retaining device (10) has a latching hook (12) for latching the locking portion (22), which latching hook is arranged on a deflectable tab (17) formed on the retaining device (10) on said side wall (13) of the receiving space (11), on which side wall the spring element (23) of the temperature sensor unit (20) is supported when the temperature sensor unit (20) is inserted, wherein the temperature sensor unit (20) can be unlocked by deflecting the tab (17) and can be pulled out of the receiving space (11) in the unlocked state.

2. Sensor assembly according to claim 1, **characterized in that** the retaining device (10) forms an end stop (16) for the insertion depth of the temperature sensor unit (20).

3. Sensor assembly according to claim 1 or 2, **characterized in that** the deflectable tab (17) is delimited from said side wall (13) on both sides of the latching hook (12) by parallel slots (17b) and the slots (17b) extend in the insertion direction (A) beyond the position of the latching hook (12).

4. Sensor assembly according to any of claims 1 to 3,
**characterized in that** the retaining device (10) consists of plastics material.

5. Sensor assembly according to any of claims 1 to 4,
**characterized in that** the retaining device (10) is an injection-molded part.

6. Sensor assembly according to any of claims 1 to 5, **characterized in that** the spring element (23) is pressed or welded to the temperature sensor portion (21) or is overmolded with plastics material of the temperature sensor portion (21).

7. Sensor assembly according to any of claims 1 to 6, **characterized in that** the spring element (23) is U-shaped with a first leg (23a) and a second leg (23b), wherein the first leg (23a) is fixed adjacent to the temperature sensor portion (21) and the second leg (23b) can be retracted and extended as a free spring tab.

8. Sensor assembly according to any of claims 1 to 7,
**characterized in that** between the temperature sensor portion (21) and the side wall (14), in the direction in which the temperature sensor portion (21) is pushed by the spring element (23), a receiving region (15) for the rail (2) is provided within the receiving space (11) of the retaining device (10).

9. Sensor assembly according to claim 8, **characterized in that** the locking portion (22) has two opposite outer surfaces (22c, 22d) which, when the temperature sensor unit (20) is inserted into the receiving space (11), extend in parallel with opposite side walls (13, 14) of the receiving space (11) and are spaced from these side walls by a gap, wherein one of the outer surfaces (22c) is arranged on the side of the spring element (23) and the other outer surface (22d) is arranged on the side of the receiving region (15) for the rail (2).

10. Sensor assembly according to any of claims 1 to 9, **characterized in that** the locking portion (22) forms a step (22b) with which the latching hook (12) of the retaining device (10) engages when the temperature sensor unit (20) is inserted in order to secure the temperature sensor unit (20) against being pulled out.

## Revendications

1. Agencement de capteurs, comprenant
un dispositif de retenue (10) pour le montage sur un rail (2), et
une unité de sonde de température (20), qui est retenue par serrage et de manière amovible sur le dispositif de retenue (10),
dans lequel l'unité de sonde de température (20) comprend une section de sonde de température (21), une section d'arrêt (22) et un élément ressort (23) et peut être insérée en tant qu'unité dans un espace de réception (11) du dispositif de retenue (10),
dans lequel dans l'état inséré de l'unité de sonde de température (20), la section d'arrêt (22) est encliquetée avec le dispositif de retenue (10) et l'élément ressort (23) est agencé entre une paroi latérale (13) de l'espace de réception (11) et la section de sonde de température (21), s'appuie sur ladite paroi latérale (13) de l'espace de réception (11) et pousse la section de sonde de température (21) en direction de la paroi latérale (14) opposée de l'espace de réception (11),
**caractérisé en ce que**
le dispositif de retenue (10) présente, pour l'encliquetage avec la section d'arrêt (22), un crochet d'encliquetage (12) qui est agencé sur une patte (17) pouvant être déviée, formée sur le dispositif de retenue (10), sur ladite paroi latérale (13) de l'espace de réception (11), sur laquelle s'appuie l'élément ressort (23) de l'unité de sonde de température (20) dans l'état inséré de l'unité de sonde de température (20), dans lequel l'unité de sonde de température (20) peut être déverrouillée par la déviation de la patte (17) et peut être retirée de l'espace de réception (11) dans l'état déverrouillé.

2. Agencement de capteurs selon la revendication 1, **caractérisé en ce que** le dispositif de retenue (10) forme une butée de fin de course (16) pour la profondeur d'insertion de l'unité de sonde de température (20).

3. Agencement de capteurs selon la revendication 1 ou 2,
**caractérisé en ce que** la patte (17) pouvant être déviée est délimitée par des fentes parallèles (17b) de part et d'autre du crochet d'encliquetage (12) par rapport à ladite paroi latérale (13) et les fentes (17b) s'étendent dans la direction d'insertion (A) au-delà de la position du crochet d'encliquetage (12).

4. Agencement de capteurs selon l'une des revendications 1 à 3, **caractérisé en ce que** le dispositif de retenue (10) est constitué de matière plastique.

5. Agencement de capteurs selon l'une des revendications 1 à 4, **caractérisé en ce que** le dispositif de retenue (10) est une pièce moulée par injection.

6. Agencement de capteurs selon l'une des revendications 1 à 5, **caractérisé en ce que** l'élément ressort (23) est pressé ou soudé avec la section de sonde de température (21) ou est enrobé de matière plastique de la section de sonde de température (21).

7. Agencement de capteurs selon l'une des revendications 1 à 6, **caractérisé en ce que** l'élément ressort (23) est conçu en forme de U avec une première branche (23a) et une seconde branche (23b), dans lequel la première branche (23a) est fixée en appui sur la section de sonde de température (21) et la seconde branche (23b) peut se comprimer et se détendre en tant que patte de ressort libre.

8. Agencement de capteurs selon l'une des revendications 1 à 7, **caractérisé en ce qu'**une zone de réception (15) pour le rail (2) est prévue à l'intérieur de l'espace de réception (11) du dispositif de retenue (10) entre la section de sonde de température (21) et la paroi latérale (14), en direction de laquelle la section de sonde de température (21) est poussée par l'élément ressort (23).

9. Agencement de capteurs selon la revendication 8, **caractérisé en ce que** la section d'arrêt 22) présente deux surfaces extérieures (22c, 22d) opposées qui, dans l'état inséré de l'unité de sonde de température (20) dans l'espace de réception (11), s'étendent parallèlement à des parois latérales (13, 14) opposées l'une à l'autre de l'espace de réception (11) et sont espacées de celles-ci par une fente, dans lequel l'une des surfaces extérieures (22c) est agencée du côté de l'élément ressort (23) et l'autre surface extérieure (22d) est agencée du côté de la zone de réception (15) pour le rail (2).

10. Agencement de capteurs selon l'une des revendications 1 à 9, **caractérisé en ce que** la section d'arrêt (22) forme un gradin (22b) avec lequel le crochet d'encliquetage (12) du dispositif de retenue (10) est en prise dans l'état inséré de l'unité de sonde de température (20), afin d'empêcher l'unité de sonde de température (20) d'être retirée.
